**Europäisches Patentamt**

**European Patent Office**

**Office européen des brevets**

(19)

(11) Veröffentlichungsnummer : **0 050 688**
**B1**

(12) **EUROPÄISCHE PATENTSCHRIFT**

(45) Veröffentlichungstag der Patentschrift :
26.09.84

(51) Int. Cl.³ : **H 02 G   7/20**

(21) Anmeldenummer : **80107886.6**

(22) Anmeldetag : **13.12.80**

(54) Schutzeinrichtung gegen die Folgen des Brechens eines Isolators.

(30) Priorität : **25.10.80 DE 3040291**

(43) Veröffentlichungstag der Anmeldung :
**05.05.82 Patentblatt 82/18**

(45) Bekanntmachung des Hinweises auf die Patenterteilung : **26.09.84 Patentblatt 84/39**

(84) Benannte Vertragsstaaten :
**AT DE FR GB IT**

(56) Entgegenhaltungen :
**DE-A- 2 751 690**
**DE-A- 2 753 544**
**DE-A- 2 816 509**
**DE-A- 2 823 731**
**DE-A- 2 851 009**
**DE-C-   895 014**
**DE-C-   974 801**

(73) Patentinhaber : **RICHARD BERGNER GMBH & CO**
**Bahnhofstrasse 8-16**
**D-8540 Schwabach (DE)**

(72) Erfinder : **Möcks, Lotar, Ing. grad.**
**Am Hohen Hof 17**
**D-8540 Rednitzhembach (DE)**
Erfinder : **Nuhn, Klaus, Ing. grad.**
**Ketteler Strasse 11**
**D-8540 Schwabach (DE)**

(74) Vertreter : **Tergau, Enno et al**
**Hefnersplatz 3 Postfach 11 93 47**
**D-8500 Nürnberg 11 (DE)**

EP 0 050 688 B1

## Beschreibung

Die Erfindung bezieht sich auf eine Schutzeinrichtung gegen die Folgen des Brechens eines Isolators von Doppelabspann- und Doppelhängeketten von Hochspannungsfreileitungen, wobei zwischen den beiden aus Isolatoren gebildeten Kettensträngen und den Leiterseilen ein trapezförmiger Abstandhalter angeordnet ist.

Bei Abspanngarnituren tritt das Problem auf, daß es beim Bruch eines Kettenstranges zu einer Kraftumlagerung kommt, die zu Querbeschleunigungen verursachenden Bewegungsvorgängen führt. Verläuft nun die Phase der Kraftumlagerung unverzögert, dann können in den gesunden Isolatoren Biegemomente auftreten, die zusammen mit der dann im verbliebenen Kettenstrang erhöhten Zugkraft zu einem Isolatorbruch mit weitreichenden Folgeschäden führen. Bekannte Abspanngarnituren weisen z. B. eine an einem trapezförmigen Abstandhalter angelenkte Zuglasche auf, welche mit einem zur Anlenkachse parallelen Nocken am Zenit eines am Abstandhalter angebrachten bogenförmigen Dämpfungsbügels anliegt, der nach beiden Schwenkrichtungen hin als verformbare Auflauframpe für den Nocken ausgebildet ist.

Es ist eine Schutzeinrichtung gemäß dem Oberbegriff des Anspruches 1 bekannt (DE-A-2 823 731), bei der die Seilaufhängung eine am Abstandhalter angelenkte Zuglasche aufweist, welche mit einem zur Anlenkachse parallelen Nocken am Zenit eines am Abstandhalter angebrachten bogenförmigen Dämpfungsbügels anliegt, der nach beiden Schwenkrichtungen hin als verformbare Auflauframpe für den Nocken ausgebildet ist. Die bekannte Garnitur ist insofern etwas vielteilig, als am eigentlichen trapezförmigen Abstandhalter über die erwähnte Zuglasche erst noch ein dreieckiger Abstandhalter befestigt sein muß, der dann die eigentlichen Leiterseile trägt. Bei dieser Konstruktion wird die Kettenlänge in unvorteilhafter Weise vergrößert. Hierbei ist noch zu berücksichtigen, daß üblicherweise der Mittelabstand der beiden parallelen Isolatorenstränge in der Größenordnung von 500 mm liegt, während die Leiterseile normalerweise lediglich einen Abstand von 400 mm haben; bei der bekannten Vorrichtung mußte hingegen wegen des Dämpfungsbügels der Abstandhalter verbreitert werden, so daß er gegenüber einem normalen trapezförmigen Abstandhalter um 180° geschwenkt eingebaut ist.

Es ist auch eine Aufhängeanordnung für Bündelleiter mit Dreifach-Hängeisolatorenketten und gelenkig miteinander verbundenen Lastausgleichhebeln bekannt (DE-B-1 006 033), wobei für den Bruch einer Isolatorenkette stoßdämpfende Mittel in Form einer nachgiebigen, die Ausgleichhebel gegenseitig abstützende Strebe vorgesehen sind, die beim Bruch einer Kette verformt wird. Als Verformglied ist ein Flacheisen mit einem verformbaren Längsschlitz vorgesehen, in dem sich bei Bruch einer Kette der darin befindliche Gelenkbolzen unter Klemmwirkung verschieben läßt. Auch hier muß den geschilderten Teilen noch ein zusätzlicher Abstandhalter nachgeschaltet sein, um Bündelleiter tragen zu können.

Diese Anmerkung gilt auch für DE-C-1 082 951, bei der bereits der Gedanke verwirklicht ist, daß im Falle eines Isolatorenbruches sich ein Gehängeteil gegen eine Anschlagfläche anlegt, während im Normalfalle, also bei nicht gebrochenen Isolatoren, das betreffende Gestängeteil an einer zweiten Anschlagfläche anliegt. Die bekannte Schutzvorrichtung ist für Dreifach-Isolatorenketten bestimmt und läßt sich auf Doppelisolatorenketten übertragen.

Schließlich ist eine Lösung des hier vorliegenden Problems mit einer Anordnung zum Aufhängen von Bündelleitern an Dreifach-Isolatorenketten (DE-C-1 035 234) versucht worden, wobei von Dreifach-Isolatorenketten jeweils zwei an den Eckpunkten und eine an dem gemeinsamen Gelenkpunkt zweier Abstandhalter befestigt sind. Hierbei ist je eine Zuglasche an jedem Abstandhalter außerhalb der Mittelsenkrechten der Verbindungslinie der Gelenkpunkte angelenkt, die mit der am anderen Abstandhalter in gleicher Weise befestigten Zuglasche in einem gemeinsamen Angriffspunkt für die Bündelleiterlast gelenkig verbunden ist. Damit wird von den Abstandhaltern und Zuglaschen ein Gelenkviereck gebildet und es ist die Anordnung so getroffen, daß nach Bruch einer Isolatorkette die Bündelleiterlast etwa gleichmäßig auf die Restketten verteilt ist. Hierbei sind die Zuglaschen durch an ihren einander zugekehrten Seiten angeordnete Abstützflächen als Anschläge zur Begrenzung der Schwenkbewegung der Abstandhalter bei Bruch einer äußeren Isolatorkette ausgebildet. In diesem Falle geht das Gelenkviereck durch Aneinanderlegen der Abstützflächen beider Zuglaschen in ein als starres Ganzes wirkendes Dreieckfachwerk über. Die Form der Abstützflächen an den Zuglaschen ist ferner so gewählt, daß bei Bruch einer äußeren Isolatorkette die Schwenkbewegung in der Mittelsenkrechten des intakten Abstandhalters gehemmt ist. Die mittleren Zuglaschen besitzen hier Dreiecksform und sind mit ihren zueinander weisenden Spitzen durch ein Gelenk verbunden, an dem über ein Laschenpaar ein weiterer Abstandhalter aufgehängt ist. Beim Bruch der mittleren Isolatorenkette sollen sich die letztgenannten Zuglaschen mit je einer Anschlagfläche an die Abstandhalter anlegen, um ein zu tiefes Absinken der hier getragenen Bündelleiter zu verhindern. Diese speziell für Dreifachabspannketten entwickelte Vorrichtung verhindert also im Falle eines Isolatorbruches lediglich ein zu tiefes Absinken der aufgehängten Leiterseile, während dem Problem des Verhinderns schädlicher, auf die gesunden Isolatoren wirkender Querbeschleunigungen keine Beachtung geschenkt wurde.

Hier will die Erfindung Abhilfe schaffen. Die Erfindung, wie sie in den Ansprüchen angegeben ist, löst die Aufgabe, eine Doppelabspann- bzw. Doppelhängekette für Zweierbündelleiter von Hochspannungsfreileitungen in der Richtung weiter zu entwickeln, daß trotz Verwendung weniger Bauelemente im Falle eines Isolatorbruches die gesunde Isolatorenkette nur einer geringen, unschädlichen Querbeschleunigung ausgesetzt ist und im Normalfalle, also bei intakten Isolatoren, das den Abstand zwischen den beiden Ketten bewirkende Bauteil wie ein starres wirkt.

Die durch die Erfindung erreichten Vorteile bestehen im wesentlichen darin, daß im Falle eines Isolatorbruches das auf der Seite der gebrochenen Isolatorenkette liegende Seil zwar absinken kann, daß jedoch in vorteilhafter Weise hierbei lediglich eine unschädliche Querbeschleunigung auf die gesunde Isolatorenkette ausgeübt wird. Einzelheiten hierzu sind in der Figurenbeschreibung angegeben.

Im nicht eingebauten Zustand, also vor der Montage, wirkt der erfindungsgemäße Abstandhalter wie ein starrer. Dies wird durch eine Schwenk-bzw. Verschiebehemmung erreicht.

Während nach einem ersten Ausführungsbeispiel das die beiden Abstandhalterteilkörper verbindende Gelenk als Einfach-Gelenk gestaltet ist, wird nach einem zweiten Beispiel ein Doppel-Gelenk den Abstandhalterteilkörpern zugeordnet.

Hierdurch werden mögliche Querbeschleunigungen auf den untersten gesunden Isolator noch weiter verringert.

Im folgenden wird die Erfindung anhand der verschiedene Gestaltungsbeispiele darstellenden Zeichnungen näher erläutert. Es zeigen :

Figur 1 eine Doppelisolatorenkette mit trapezförmigenbstandhalter sowie einem schematisch angedeuteten Zweier-Seilbündel und Andeutung eines möglichen Isolatorbruches,

Figur 2 die Zweifachisolatorenkette gemäß Figur 1, jedoch mit gebrochenem Isolator und etwas verschwenktem ungeteilten Trapezförmigen Abstandhalter,

Figur 3 einen trapezförmigen Abstandhalter mit einem Einfach-Gelenk,

Figur 4 den Abstandhalter gemäß Figur 3, jedoch in der Stellung nach Bruch eines Isolators,

Figur 5 ein erstes praktisches Ausführungsbeispiel eines mit einem Einfach-Gelenk versehenen trapezförmigen Abstandhalters,

Figur 6 den trapezförmigen Abstandhalter gemäß Figur 5, jedoch ergänzt durch eine als Flachstab ausgebildete Transportsicherung,

Figur 7 den Abstandhalter gemäß Figur 6, jedoch in der Stellung nach Bruch eines Isolators,

Figur 8 den Abstandhalter analog Figur 5, jedoch mit als Dehnbügel ausgebildeter Transportsicherung,

Figur 9 den zweiteiligen trapezförmigen Abstandhalter mit einem Doppel-Gelenk und zwischen der Symmetrieebene und den Anlenkachsen der Leiterseile liegenden Schwenkachsen,

Figur 10 den zweiteiligen trapezförmigen Abstandhalter gemäß Figur 9, jedoch mit den Anlenkachsen der Leiterseile identischen Schwenkachsen,

Figuren 11 bis 14 diverse Ausführungsbeispiele für die Gelenklasche,

Figure 15 ein weiteres Ausführungsbeispiel des Abstandhalters, bei dem die Schwenkhemmung mit dem Gelenk eine Baueinheit bildet,

Figur 16 den Abstandhalter analog Figur 15, jedoch in einstückiger Ausführung,

Figur 17 ein weiteres Ausführungsbeispiel der Schutzeinrichtung mit Doppel-Gelenk und mit dreieckförmigen Abstandhalterteilkörpern,

Figuren 18 bis 20 eine zusätzliche Schwenkhemmung durch an den Abstandhalterteilkörpern angebrachte Massenanhäufungen und

Figur 21 eine Weiterbildung des Abstandhaltes gemäß Figur 17 mit geänderter Form der Abstandhalterteilkörper.

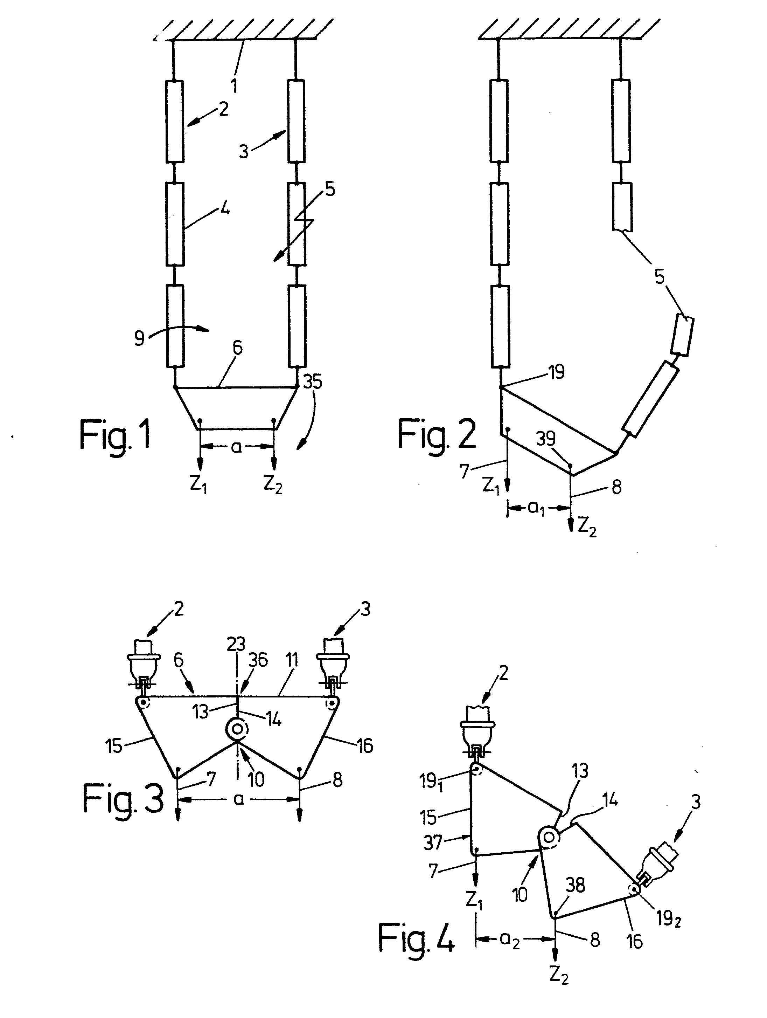

Fig. 1 zeigt eine Doppelisolatorenkette, an der über einen trapezförmigen Abstandhalter in an sich bekannter Weise das Zweierbündel einer Hochspannungsfreileitung aufgehängt ist. Selbstverständlich könnte anstelle des Zweierbündels auch ein Viererbündel treten. Es sind hier an einer nur angedeuteten Masttraverse 1 eines nicht dargestellten Mastes einer Hochspannungs-Freileitung zwei Kettenstränge 2, 3, die hier aus je drei Langstab-Isolatoren 4 bestehen, in bekannter Weise angeordnet. Zwischen den leiterseilseitigen Enden der beiden Kettenstränge liegt ein gelenkig angeschlossener trapezförmigen Abstandhalter 6. Dieser Abstandhalter ist wie meistens üblich durch zwei mit einem gewissen gegenseitigen Abstand parallelliegende Bleche gebildet. Der Erfindungsgedanke läßt sich jedoch auch mit sogenannten Einplatinenabstandhaltern verwirklichen. Die Trapezform des Abstandhalters ergibt sich daraus, daß der Abstand zwischen den Isolatorenketten etwa 500 mm, zwischen den Seilen eines Seilbündels 400 mm beträgt. Es können jedoch auch andere Abstände verwendet werden Fig. 2 zeigt die gleiche Aufhängung wie Fig. 1, jedoch mit dem Unterschied, daß ein Isolator an der mit 5 symbolisierten Stelle gebrochen ist. Während ursprünglich die beiden Leiterseile 7,8 auf den trapezförmigen Abstandhalter 6 mit der gleichen Zugkraft eingewirkt haben ($Z_1 = Z_2$) wird im Bruchfalle $Z_2$ kleiner als $Z_1$ unter gleichzeitiger Verringerung des gegenseitigen Abstandes (a) der beiden Leiterseile 7,8 zu (a1). Letztendlich hat der verbliebene Isolatorenstrang nicht nur eine erhöhte Last als im Normalfalle zu tragen, sondern es wirkt, was erheblich schädlicher ist, vor allem auf den untersten Isolator der gesunden Isolatorenkette durch die Schwenkbewegung (Pfeil 35) des Abstandhalters momentan eine erhebliche Querbeschleunigung ein, wie dies in Fig. 1 durch Pfeil 9 angedeutet ist. Gegen derartige Querbeschleunigungen sind die üblichen Langstab-Isolatoren besonders empfindlich.

Fig. 3 zeigt ein erstes Beispiel einer grundsätzlichen Lösungsmöglichkeit für dieses Problem, wonach der trapezförmige Abstandhalter 6 gewissermaßen in der Mitte aufgetrennt, aber durch ein Mittelgelenk 10 verbunden ist. Dieses hier dargestellte Einfach-Gelenk ist gegenüber der Oberkante 11 des Abstandhalters etwas nach unten gerückt. Dadurch können sich die Schnittkanten 13, 14 der jeweiligen Abstandhalterteilkörper 15, 16 nach Art eines Anschlages 36 gegeneinander legen. Da nun der gegenseitige Abstand (a) der Leiterseile 7, 8 kleiner ist als der Abstand der Isolatorenketten 2, 3, wirkt im Bereich des Gelenkes 10 ein Drehmoment, das bestrebt ist, die beiden Abstandhalterteilkörper 15, 16 in der aus Fig. 3 ersichtlichen Lage zu halten. Im Normalfalle, also bei nicht gebrochenen Isolatorenketten, wirkt der aus den Abstandhalterteilkörpern 15, 16 gebildete Abstandhalter wie ein ungeteilter trapezförmiger Abstandhalter.

Fig. 4 zeigt den Abstandhalter analog Fig. 3, jedoch in einer Zwischenstellung nach Bruch eines Isolators analog Fig. 2. Auf den linken Abstandhalterteilkörper 15 wirkt nach wie vor die Kraft des hier aufgehängten Leiterseiles 7. Da jedoch der rechte Abstandhalterteilkörper 16 von seiner Isolatorenkette 3 nicht mehr getragen wird, wirkt momentan auf diesen Abstandhalterteilkörper 16 eine kleinere Seilkraft $Z_2$, was sich durch die Entspannung des Leiterseiles 8 unschwer erklärt. Ferner verringert sich der gegenseitige Leiterseilabstand ($a_2$), was zugleich eine Verringerung des wirksamen Hebelarms bedeutet. Es ist somit ein starkes Verschwenken des rechten Abstandhalterteilkörpers 16, jedoch nur eine geringfügige Verschwenkung des linken Abstandhalterteilkörpers 15 zu bemerken : Die gefürchtete Querbeschleunigung 9 (Fig. 1) beim Gelenk 19 zwischen dem linken Abstandhalterteilkörper 15 und dem untersten Isolator der gesunden Isolatorenkette 2 ist erheblich verringert.

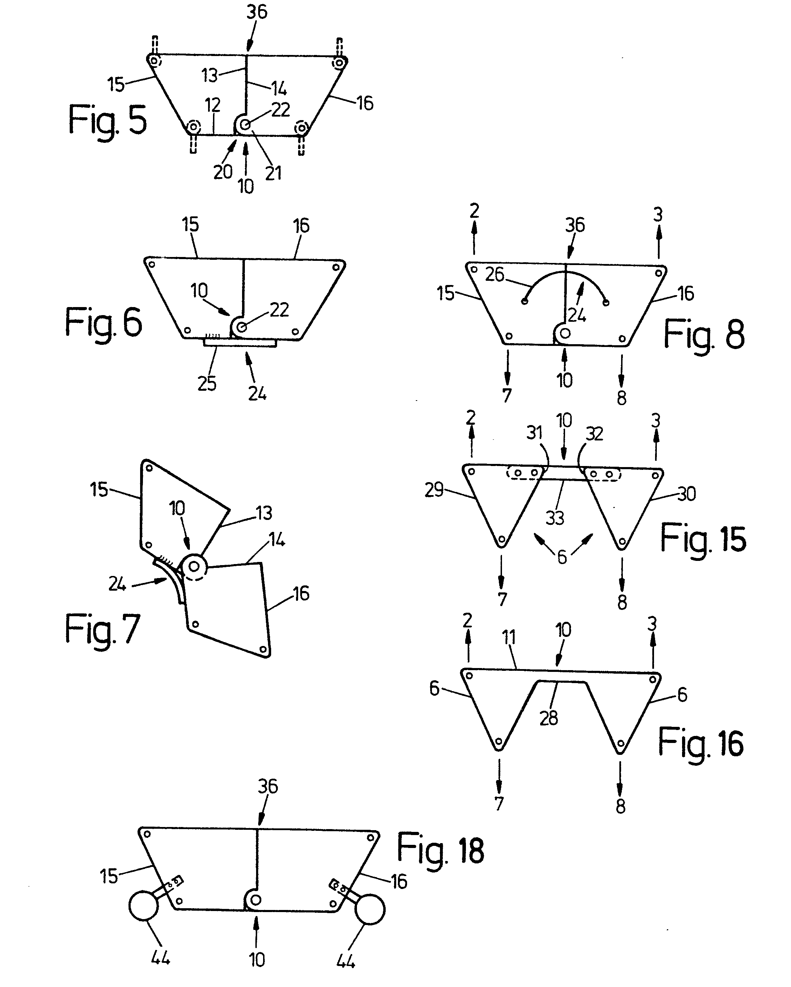

Fig. 5 zeigt ein erstes praxisgerechtes Ausführungsbeispiel des erfindungsgemäßen trapezförmigen Abstandhalters, wobei dessen Teilkörper 15, 16 wie bekannt jeweils aus zwei Blechen gebildet sind. Das Einfach-Gelenk 10 ist hier durch ösenartige Ausbildung der einzelnen Abstandhalterbleche gebildet, welche ösenartigen Lappen 20, 21 jeweils eine Bohrung zum Durchführen eines Bolzens 22 aufweisen. Dieses Gelenk liegt zweckmäßigerweise in der Symmetrieebene 23 zwischen den beiden Isolatorenketten 2, 3 sowie nahe der Unterkante 12 der Abstandhalterteilkörper 15, 16. Die tiefe Lage des Drehgelenkes 10 ist deswegen zweckmäßig, weil dadurch die zueinander weisenden Schnittkanten 13, 14 der Abstandhalterteilkörper 15, 16 zugleich die Funktion des erwähnten Anschlages 36 übernehmen können. Zweckmäßigerweise ist jeder Abstandhalterteilkörper aus zwei parallel zueinander liegenden und in bekannter Weise durch Abstandstücke auf Abstand gehaltenen Blechen gebildet.

Das Einfach-Gelenk 10 kann beispielsweise auch dadurch gebildet sein, daß zwischen die beiden Bleche eines Abstandhalterteilkörpers unten ein in eine Öse auslaufendes Distanzstück zwischengelegt ist, das dann zwischen zwei Bohrungen in den beiden Blechen des anderen Abstandhalterteilkörpers ragt. Auch in diesem Falle ist durch diese Bohrungen ein Bolzen, eine Schraube oder ein Niet hindurchgesteckt.

Fig. 6 zeigt eine Ausgestaltung des vorbeschriebenen Ausführungsbeispiels. Hier ist unterhalb des Gelenkes eine Transportsicherung 24 angebracht, die zugleich die Funktion einer Schwenkhemmung hat. Im gezeichneten Falle hat die Transportsicherung die Formgestalt eines Biegestabes 25, der mit dem einen Abstandhalterteilkörper, z. B. 15, fest verbunden ist und sich gegen den anderen Abstandhalterteilkörper, z. B. 16, von unten fest anlegt. Bei durchgestecktem Gelenkbolzen 22 wirkt also der zweiteilige trapezförmige Abstandhalter wie ein starrer einteiliger trapezförmiger Abstandhalter 6. Durch entsprechende Dimensionierung dieses Biegestabes 25 läßt sich jedoch genau das Drehmoment bestimmen, bei dessen Überschreitung die beiden Abstandhalterteilkörper sich öffnen, wie dies in Fig. 7 angedeutet ist.

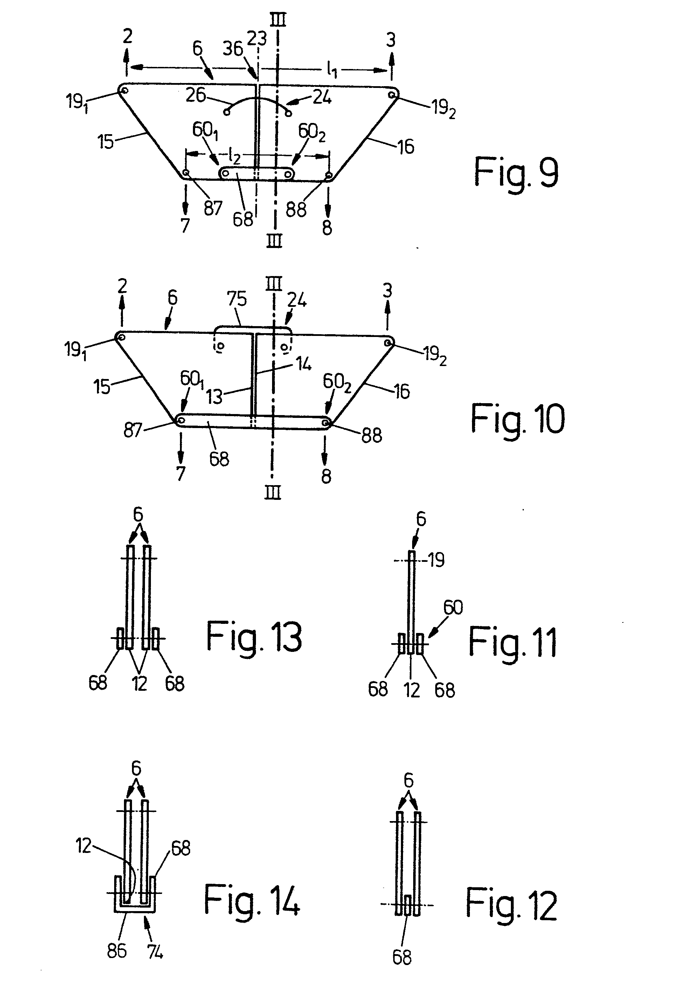

Zweckmäßigerweise ist die Schwenkhemmung 24 entweder unterhalb (Fig. 6 und 7) oder oberhalb (Fig. 8) des Gelenkes 10 angebracht. Der erwähnte Biegestab könnte zweckmäßigerweise auch eine Blattfeder sein. Die gleiche Wirkung läßt sich mit einem hier nicht dargestellten Dehnstab erzielen, der dann jedoch oberhalb des Gelenkes liegen müßte. Generell sind für die Schwenkhemmung die veschiedensten bekannten Maschinenelemente anwendbar. Beispielsweise kann ein Dämpfer vorgesehen werden, der je nach Größe und Richtung der im Falle des Bruches eines Isolatorenstranges zu erwartenden Kräfte ein hydraulischer Dämpfer, ein Knickstab, ein Dehnstab, ein Reibdämpfer und/oder eine Lasche mit unter Dämpfwirkung aufweitbarem Schlitz sein kann.

Eine weitere Möglichkeit, die Transportsicherung 24 auszubilden, zeigt Fig. 8. Hier liegt ein gekrümmter Bügel 26 oberhalb des Gelenkes 10 und ist mittels nur angedeuteter Ösen und Bolzen an den Abstandhalterteilkörpern 15, 16 befestigt. Bei der üblichen ausbildung solcher Abstandhalter aus jeweils zwei Blechen, liegt der gekrümmte Bügel 26 zweckmäßigerweise außerhalb der Blechpaare. Im Falle eines Isolatorenbruches wird der Bügel 26 zunächst gestreckt und dann zufolge seines verhältnismäßig geringen Querschnittes gedehnt, wodurch ein weiterer Kraftverzehr erfolgt.

Fig. 9 zeigt als weiteres Lösungsbeispiel einen aus zwei Abstandhalterteilkörpern 15, 16 gebildeten trapezförmigen Abstandhalter 6, dessen beide Teilkörper durch ein Doppel-Gelenk $60_1$, $60_2$ sowie eine Gelenklasche 68 verbunden sind. Die symmetrisch zur Symmetrieebene 23 angeordneten Einzel-Gelenke 87, 88 liegen in der Nähe der Unterkante 12 der Abstandhalterteilkörper 15, 16. Die Anlenkpunkte der beiden Kettenstränge sind wieder mit 2 und 3 bezeichnet und diejenigen der Leiterseile 7, 8 mit 87 und 88. Im Normalbetrieb berühren sich die Innenkanten 13, 14 der beiden Abstandhalterteilkörper 15 und 16 in einem Anschlag 36. Der Abstandhalter gemäß Fig. 10 unterscheidet sich gegenüber dem vorbeschriebenen lediglich dadurch, daß die Schwenkachsen des Doppel-Gelenkes $60_1$, $60_2$ mit den Anlenkachsen 87, 88 der Leiterseile 7, 8 identisch sind. Diese Ausführung erlaubt eine Doppelausnutzung der zur Aufhängung der Leiterseile ohnehin erforderlichen Bolzen.

Die durch diese Ausgestaltung erzielte weitere Verbesserung beruht auf folgenden, von der Anmelderin festgestellten Tatsachen : Bei der Lösung nach Fig. 3 und 4 mit einem Einfach-Gelenk wurde unterstellt, daß die der linke Abstandhalterteilkörper 15 festgehalten ist, während der rechte Teilkörper 16 nach Bruch eines Isolators ausschwenkt. Wenn die bei 8 angreifende Kraft $Z_2$ des rechten Abstandhalterteilkörpers dreht, tritt beim Einfach-Gelenk eine Zugkraft auf, die mit dem Hebel « Gelenk 10 bis Gelenk $19_1$ » ein Drehmoment M um $19_1$ auf den linken Abstandhalterteilkörper ausübt. Diesem Moment M wird das aus der Kraft $Z_1$ bei 7 und dem Hebelarm « Gelenk 37 bis Gelenk $19_1$ » resultierende Moment überlagert.

Bei der Lösung nach Fig. 10 mit einem Doppel-Gelenk tritt am Gelenk 87 eine Zugkraft auf, wenn die bei 88 angreifende Kraft den rechten Abstandhalterteilkörper 16 dreht. Die Zugkraft übt über den Hebel « Gelenk 87 bis Gelenk $19_1$ » ein Drehmoment M' um $19_1$ auf den linken Abstandhalterteilkörper 15 aus. Diesem Moment wird das aus der Kraft bei 87 resultierende Moment überlagert.

Unter der Voraussetzung gleich großer Ausgangskräfte bei 37, 38 und 87, 88 für die Ausführungen mit einem Einfach-Gelenk und mit einem Doppel-Gelenk ist bei der Doppel-Gelenk-Ausführung wegen des offensichtlich kürzeren Hebelarmes das Moment M' kleiner als M.

Wegen der besseren Überschaubarkeit ist vorstehend die Lage des Drehpunktes bei $19_1$ angenommen worden. Tatsächlich liegt bei dem angenommenen Isolatorbruch der Momentandrehpunkt im Bereich des linken Abstandhalterteilkörpers 15. Daß die beim Gelenk $19_1$ wirkenden Querbeschleunigungen bei der Lösung mit dem Doppel-Gelenk am geringsten werden, haben von der Anmelderin durchgeführte interne Versuche erwiesen.

Die Figuren 11 bis 14 beinhalten alle je einen Schnitt entsprechend Schnittlinie III-III gemäß Fig. 9 bzw. 10. Demnach kann auch hier jeder Abstandhalterteilkörper 15, 16 aus einem Blech oder aus zwei parallelliegenden Blechen gebildet sein. Die Gelenklaschen 68 liegen gemäß Fig. 11 beidseitig des trapezförmigen Abstandhalters 6. Sofern die zweiblechige Ausführung gewählt wird, läßt sich eine Gelenklasche 68 zwischen den Blechen anordnen, wie dies Fig. 12 zeigt. Es ist auch möglich, ein Paar Gelenklaschen 68 entsprechend Fig. 13 anzuordnen.

Die letztbeschriebene Ausführung kann dadurch ausgestaltet werden, daß die beiden Gelenklaschen 68 durch eine an ihrer Unterkante fest angebrachte Verschiebehemmung 74 miteinander verbunden sind. Diese Verschiebehemmung legt sich im Normalfalle gegen die Unterkante 12 des Abstandhalters 6. Es wäre auch möglich, was jedoch zeichnerisch nicht dargestellt wurde, an der Gelenklasche 68 gemäß Fig. 12 eine Verschiebehemmung 74 anzubringen, wodurch dann die Gelenklasche 68 im Querschnitt T-förmig wird.

In Fig. 9 ist die schon bei Fig. 8 erwähnte Form der Transportsicherung 24 eingezeichnet, die als gekrümmter Bügel 26 gestaltet ist, der mittels nur angedeuter Ösen und Bolzen an den Abstandhalterteilkörpern 15, 16 befestigt ist.

Eine weitere Variante der Transportsicherung 24, die besonders für die zweiblechige Ausführung der Abstandhalterteilkörper 15, 16 geeignet ist, zeigt Fig. 10. Da jedes Blechpaar ohnehin durch Distanzstücke auf Abstand gehalten werden muß, ist es leicht möglich, über diese Distanzstücke eine elastische Klammer 75 aus einem federnden Material überzustreifen. Diese elastische Klammer 75 ist zweckmäßigerweise im Querschnitt U-förmig ; die freien Schenkel dieses Profils sind zweckmäßigerweise etwas nach innen gebogen.

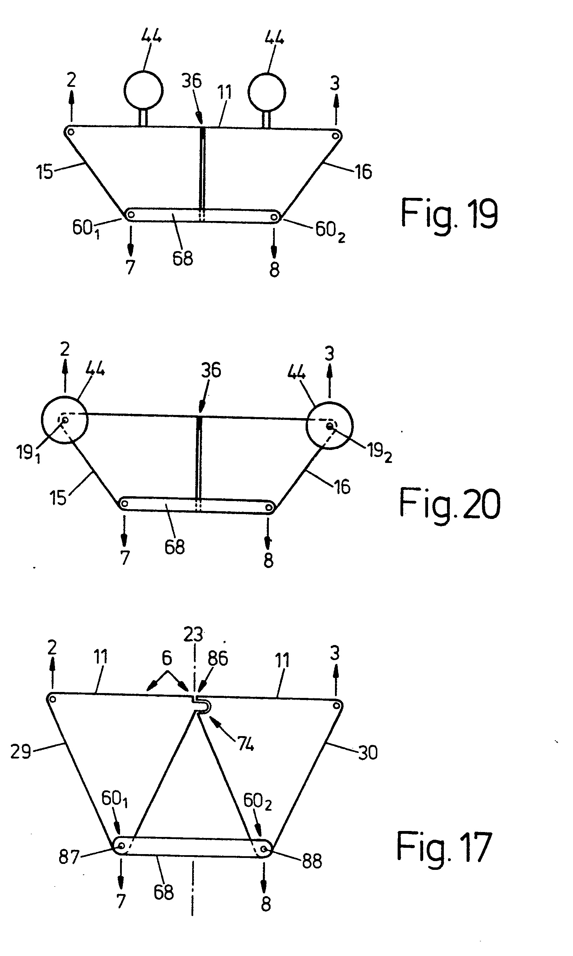

Fig. 16 zeigt eine Lösung, bei der die Funktionen des Einfach-Gelenkes 10 sowie der Schwenkhemmung 24 in einem Bauelement vereinigt sind. In der Praxis wird dies so ausgeführt, daß die Bleche des trapezförmigen Abstandhalters 6 von der unteren Kante her so weit ausgeklinkt werden, bis nahe bei der waagrechten Oberkante 11 lediglich ein verhältnismäßig dünn dimensionierter Steg 28 übrigbleibt. Dieser Steg ist derart bemessen, daß im Normalfalle die Funktion eines Abstandhalters (bzw. einer Transportsicherung) gewährleistet ist, daß aber im Falle eines Isolatorenbruches dieser Steg 28 sich unter Kraftverzehr, der vorher bestimmt werden kann, durchbiegt.

Eine Fortbildung dieser Lösung zeigt Fig. 15. Hier ist der trapezförmige Abstandhalter 6 zunächst wieder zweiteilig, wobei die beiden Teilkörper 29, 30 in etwa Dreieckform haben. Zweckmäßigerweise wendet man auch hier wieder zwei in einem gewissen Abstand parallelliegende Bleche an. Im Bereich der beiden oberen inneren Ecken 31, 32 sind die beiden Teilkörper 29, 30 durch einen Steg 33 verbunden, der eine feste Verbindung mit den Teilkörpern 29, 30 aufweist. Im Normalfalle, also wenn beidseitig je ein Blech-Paar angewandt wird, ist der Steg vorteilhafterweise zwischen die jeweiligen Blech-Paare gelegt und mit diesen etwa durch Schraubung, Nietung oder Schweißung verbunden.

Fig. 17 zeigt ein weiteres Ausführungsbeispiel des trapezförmigen Abstandhalters 6, wobei die beiden Teilkörper 29, 30 ebenfalls angenähert Dreieckform haben. Die Abstandhalterteilkörper können auch hier aus zwei in einem gewissen Abstand parallelliegenden Blechen bestehen. Die oberen Kanten 11 der Abstandhalterteilkörper liegen in einer Ebene und es weisen die Dreieckspitzen in Richtung zu den Leiterseilen 7, 8 hin. Das Doppel-Gelenk $60_1$, $60_2$ ist auch hier in Doppelfunktion mit den Gelenken 87, 88 zur Aufhängung der Leiterseile 7, 8 identisch. Der Anschlag 86 dient nicht nur als Anschlag 36, sondern auch als Verschiebehemmung indem er zugleich eine Parallelverschiebung der Abstandhalterteilkörper 29, 30 parallel zur Symmetrieebene 23 verhindert. Hierzu ist an dem einen Abstandhalterteilkörper, beispielsweise 29, eine Nase angearbeitet, die in eine Nut in dem anderen Abstandhalterteilkörper, beispielsweise 30, eingreift.

Fig. 18 zeigt eine Ausgestaltung der Erfindung, wobei von der Ausführung gemäß Fig. 5 ausgegangen wird. Als Schwenkhemmung sind hier Massenanhäufungen 44 in möglichst großem Abstand vom Einfach-Gelenk 10 mit Hilfe eines Stabes an den Abstandhalterteilkörpern 15, 16 fest angebracht, wie dies bereits aus DE-U-7 811 354 bekannt ist. Die Massenanhäufungen können auch gemäß Fig. 19 oder 20 angeordnet sein. Die Figuren 19 und 20 zeigen analoge Ausgestaltungen der Erfindung gemäß Fig. 9 oder 10 ; zur Verstärkung der erwünschten Wirkung sind gemäß Fig. 19 die Massenanhäufungen mit Hilfe eines Stabes an den Oberkanten 11 der Abstandhalterteilkörper 15, 16 fest angebracht. Gemäß Fig. 20 übernehmen die Bolzen zum Gelenk $19_1$, $19_2$ zugleich die Aufgabe des die Massenanhäufungen tragenden Stabes.

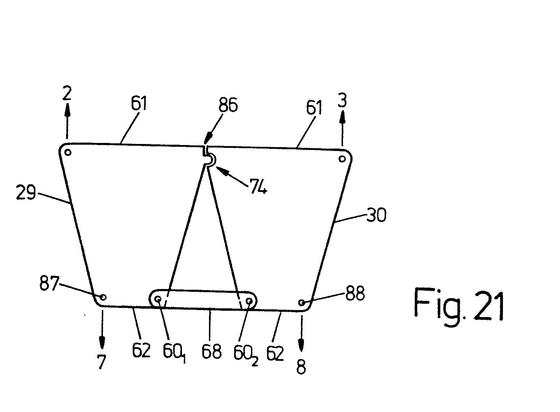

Eine Weiterbildung der Lösung gemäß Fig. 17 ist in Figur 21 dargestellt. Jeder der Abstandhalterteilkörper 29, 30 ist hier etwa trapezförmig gestaltet und es liegen die langen Trapezseiten 61 in einer Waagerechten. Die untenliegenden kurzen Trapezseiten 62 weisen je 2 Gelenke auf. Von diesen sind die inneren Gelenke $60_1$, $60_2$ über mindestens eine Gelenklasche verbunden. Die Leiterseile 7, 8 sind über äußere Gelenke 87, 88 mit den Abstandhalterteilkörpern 29, 30 verbunden. Der Berührungsstelle der langen Trapezseiten 61 ist eine Verschiebehemmung 74 zugeordnet, die etwa entsprechend dem Anschlag 68 gestaltet sein kann.

## Ansprüche

1. Schutzeinrichtung gegen die Folgen des Brechens eines Isolators (4) von Doppelabspann- und Doppelhängeketten von Hochspannungsfreileitungen, wobei zwischen den beiden aus Isolatoren (4) gebildeten Kettensträngen (2, 3) und den Leiterseilen (7, 8) ein trapezförmiger Abstandhalter (6) angeordnet ist, dadurch gekennzeichnet, daß der trapezförmige Abstandhalter (6) im wesentlichen aus zwei weitgehend symmetrischen, zu beiden Seiten der mittig zwischen den beiden Hängeketten verlaufenden Trennebene (23) angeordneten Abstandhalterteilkörpern (15, 16 ; 29, 30) besteht, daß die Abstandhalterteilkörper (15, 16 ; 29, 30) über eine Schwenkgelenkanordnung (10 ; 60) verbunden sind und daß der Schwenkgelenkanordnung (10 ; 60) eine das Verschwenken der Abstandhalterteilkörper (15, 16 ; 29, 30) lediglich in von den Isolatoren (z. B. 3) wegweisender Schwenkrichtung (Pfeil 35 in Figur 1) ermöglichende Schwenk- bzw. Verschiebehemmung (24, 74) zugeordnet ist.

2. Schutzeinrichtung nach Anspruch 1, dadurch gekennzeichnet, daß das Schwenkgelenk als Einfach-Gelenk (10) ausgebildet ist.

3. Schutzeinrichtung nach Anspruch 1, dadurch gekennzeichnet, daß die Schwenkhemmung durch gegenseitigen Anschlag (36) der einander zugekehrten Kanten (13, 14) der beiden Abstandhalterteilkörper (15, 16) gebildet wird und daß unterhalb dieses Anschlages (36) das aus Ösenteilen (20, 21) und einem die Ösenteile durchsetzenden Bolzen (22) gebildete Einfach-Gelenk (10) liegt. »

4. Schutzeinrichtung nach einem der Ansprüche 1 oder 2, dadurch gekennzeichnet, daß die Schwenkhemmung (24) als dem Gelenk (10) zugeordneter Biegestab (25) ausgebildet ist.

5. Schutzeinrichtung nach Anspruch 4, daß der Biegestab (25) im Gelenkbereich an der Unterkante des einen Abstandhalterteilkörper (z. B. 15) befestigt ist und sich an die Unterkante des zweiten Abstandhalterteilkörpers (z. B. 16) anlegt.

6. Schutzeinrichtung nach Anspruch 1 oder 2, dadurch gekennzeichnet, daß die Schwenkhemmung (24) als mit den Abstandhalterteilkörpern (15, 16) verbundene, oberhalb des Gelenkes gelegene, gekrümmte Dehnbügel (26) aus gebildet ist.

7. Schutzeinrichtung nach Anspruch 1 oder 2, dadurch gekennzeichnet, daß die Schwenkhemmung (24) als in möglichst großem Abstand von den im Falle eines Isolatorenbruches (bei 5) gültigen Momentandrehpunkten an den Abstandhalterteilkörpern (15, 16) über je einen Stab fest angebrachte Massenanhäufung (44) gestaltet ist.

8. Schutzeinrichtung nach Anspruch 1 oder 2, dadurch gekennzeichnet, daß die Schwenkhemmung (24) als hydraulischer Dämpfer, Knickstab, Dehnstab, Reibdämpfer und/oder als eine Lasche mit unter Dämpfwirkung aufweitbarem Schlitz ausgebildet ist.

9. Schutzeinrichtung nach Anspruch 1, dadurch gekennzeichnet, daß die Gelenkanordnung (10) als ein die beiden Abstandhalterteilkörper (29, 30) verbindender, verhältnismäßig schwach dimensionierter Steg (33) gestaltet ist (Fig. 15).

10. Schutzeinrichtung nach Anspruch 9, dadurch gekennzeichnet, daß die beiden Abstandhalterteilkörper samt dem sie verbindenden Steg (28) einstückig gestaltet sind.

11. Schutzeinrichtung nach Anspruch 1, dadurch gekennzeichnet, daß die Schwenkgelenkanordnung als ein Doppelgelenk ($60_1$, $60_2$) mit mindestens einer die beiden Einzelgelenke verbindender Gelenklasche (68) ausgebildet ist (Fig. 17).

12. Schutzeinrichtung nach Anspruch 11, dadurch gekennzeichnet, daß die Schwenkachsen des Doppel-Gelenkes ($60_1$, $60_2$) zwischen der Symetrieebene (23) und den Anlenkachsen (87, 88) der Leiterseile (7, 8) liegen.

13. Schutzeinrichtung nach Anspruch 11, dadurch gekennzeichnet, daß die Schwenkachsen des Doppel-Gelenkes (60₁, 60₂) mit den Anlenkachsen (87, 88) der Leiterseile (7, 8) identisch sind.

14. Schutzeinrichtung nach Anspruch 11, dadurch gekennzeichnet, daß die Schwenkhemmung (24) als dem Doppelgelenk (60) zugeordnete elastische Klammer (75) ausgebildet ist.

15. Schutzeinrichtung nach Anspruch 11, dadurch gekennzeichnet, daß die Schwenkhemmung (24) als mit den Abstandhalterteilkörpern (15, 16) verbundener, oberhalb des Doppelgelenkes (60) gelegener, gekrümmter Dehnbügel (26) ausgebildet ist.

16. Schutzeinrichtung nach Anspruch 11, dadurch gekennzeichnet, daß die Verschiebehemmung (74) als ein unterhalb der Gelenklasche (68) befestigter und sich gegen die Unterkante (12) der Abstandhalterteilkörper (15, 16) legender Anschlag (86) gestaltet ist.

17. Schutzeinrichtung nach Anspruch 11, dadurch gekennzeichnet, daß die Schwenkhemmung als in möglichst großem Abstand von den im Falle eines Isolatorenbruches gültigen Momentandrehpunkten an den Abstandhalterteilkörpern (15, 16) über je einen Stab fest angebrachte Massenanhäufung (44) gestaltet ist.

18. Schutzeinrichtung nach Anspruch 11, dadurch gekennzeichnet, daß die Abstandhalterteilkörper (29, 30) etwa dreieckförmig gestaltet sind (Fig. 17), daß die Oberkanten (11) der Dreiecke in einer Waagerechten liegen, daß sowohl die Gelenklasche (68) als auch die Leiterseile (7, 8) an den nach unten weisenden Dreieckspitzen angelenkt sind und daß als Schwenkhemmung ein Anschlag (86) vorgesehen ist, der als in eine Nut (z. B. an 30) eingreifende Nase (z. B. an 29) gestaltet ist.

19. Schutzeinrichtung nach Anspruch 11, dadurch gekennzeichnet, daß die Abstandhalterteilkörper (29, 30) etwa trapezförmig gestaltet sind (Fig. 21), daß die langen Trapezseiten (61) in einer Waagerechten liegen, daß die kurzen Trapezseiten (62) je zwei Gelenke aufweisen, daß die inneren Gelenke (60₁, 60₂) über mindestens eine Gelenklasche (68) verbunden sind, daß die Leiterseile (7, 8) über äußere Gelenke (87, 88) mit den Abstandhalterteilkörper (29, 30) verbunden sind und daß die Verschiebehemmung (74) der Berührungsstelle der langen Trapezseiten £61) zugeordnet ist.

## Claims

1. Arrangement protecting against the consequences of the breaking of an insulator (4) in double straining strings and double suspension strings in high-voltage overhead lines, wherein a trapezoidal spacer (6) is disposed between the two strings (2, 3) composed of insulators (4) and the conductor lines (7, 8), characterised in that the trapezoidal spacer (6) consists essentially of two substantially symmetrical spacer portions (15, 16 ; 29, 30) disposed one on each side of the dividing plane (23) extending centrally between the two suspension strings, that the spacer portions (15, 16 ; 29, 30) are joined by a swivel joint arrangement (10 ; 60), and that the swivel joint arrangement (10 ; 60) has associated with it a swivel and displacement detent means (24, 74) permitting the swivelling of the spacer portions (15, 16 ; 29, 30) only in the direction (arrow 35 in Figure 1) pointing away from the insulators (for example 3).

2. Protective arrangement according to Claim 1, characterised in that the swivel joint is in the form of a single joint (10).

3. Protective arrangement according to Claim 1, characterised in that the swivel detent means is formed by the mutual abutment (36) of the mutually facing edges (13, 14) of the two spacer portions (15, 16), and that the single joint (10) formed of eye parts (20, 21) and a pin (22) passing through the eye parts lies beneath this abutment point (36).

4. Protective arrangement according to one of Claims 1 and 2, characterised in that the swivel detent means (24) is in the form of a flexural rod (25) associated with the joint (10).

5. Protective arrangement according to Claim 4, characterised in that the flexural rod (25) is fastened in the joint region to the bottom edge of one spacer portion (for example 15) and bears against the bottom edge of the other spacer portion (for example 16).

6. Protective arrangement according to Claim 1 or 2, characterised in that the swivel detent means (24) is in the form of a curved expanding bow (26) joined to the spacer portions (15, 16) and disposed above the joint.

7. Protective arrangement according to Claim 1 or 2, characterised in that the swivel detent means (24) is in the form of mass accumulations (44) fastened by respective rods to each of the spacer portions (15, 16) at the greatest possible distance from the instantaneous pivot points existing in the event of the breakage of an insulator (at 5).

8. Protective arrangement according to Claim 1 or 2, characterised in that the swivel detent means (24) is in the form of a hydraulic damper, strut, expanding rod, friction damper, and/or a link having a slot adapted to expand with a damping action.

9. Protective arrangement according to Claim 1, characterised in that the joint arrangement (10) is in the form of a web (33) which is of relatively slight dimensions and which joins together the two spacer portions (29, 30).

10. Protective arrangement according to Claim 9, characterised in that the two spacer portions are made in one piece together with the web (28) connecting them.

11. Protective arrangement according to Claim 1, characterised in that the swivel joint arrangement is in the form of a double joint (60₁, 60₂) having at least one joint link (68) connecting the two individual joints (Figure 17).

12. Protective arrangement according to Claim 11, characterised in that the swivel axes of the

double joint ($60_1$, $60_2$) lie between the plane of symmetry (23) and the articulation axes (87, 88) of the conductor lines (7, 8).

13. Protective arrangement according to Claim 11, characterised in that the swivel axes of the double joint ($60_1$, $60_2$) are identical to the articulation axes (87, 88) of the conductor lines (7, 8).

14. Protective arrangement according to Claim 11, characterised in that the swivel detent means (24) is in the form of a resilient clip (75) associated with the double joint (60).

15. Protective arrangement according to Claim 11, characterised in that the swivel detent means (24) is in the form of a curved expansion bow (26) joined to the spacer portions (15, 16) and disposed above the double joint (60).

16. Protective arrangement according to Claim 11, characterised in that the displacement detent means (74) is in the form of a stop (86) fastened under the joint link (68) and bearing against the bottom edge (12) of the spacer portions (15, 16).

17. Protective arrangement according to Claim 11, characterised in that the swivel detent means is in the form of mass accumulations (44) fastened by respective rods to each of the spacer portions (15, 16) at the greatest possible distance from the instantaneous pivot points existing in the event of the breakage of an insulator.

18. Protective arrangement according to Claim 11, characterised in that the spacer portions (29, 30) are roughly triangular in shape (Figure 17), that the top edges (11) of the triangles lie in a horizontal plane, that both the joint link (68) and the conductor lines (7, 8) are articulated on the downwardly pointing corners of the triangles, and that the swivel detent means provided is a stop (86) which is in the form of a snout (for example at 29) engaging in a groove (for example at 30).

19. Protective arrangement according to Claim 11, characterised in that the spacer portions (29, 30) are roughly trapezoidal in shape (Figure 21), that the long sides (61) of the trapezium lie in a horizontal plane, that the short sides (62) of the trapezium each have two joints, that the inner joints ($60_1$, $60_2$) are joined by at least one joint link (68), that the conductor lines (7, 8) are joined to the spacer portions (29, 30) by outer joints (87, 88), and that the displacement detent means (74) is associated with the contact point of the long trapezium sides (61).

## Revendications

1. Dispositif de protection contre les suites de la rupture d'un isolateur (4) de chaînes doubles d'ancrage et de suspension de lignes aériennes à haute tension, une entretoise en trapèze (6) étant disposée entre des brins de chaînes (2, 3) composés d'isolateurs (4) et les câbles conducteurs (7, 8), caractérisé en ce que l'entretoise en trapèze (6) est composée principalement de deux demi-entretoises (15, 16 ; 29, 30), conformées symétriquement dans une large mesure et centrées par rapport au plan de symétrie (23), en ce que les demi-entretoises (15, 16 ; 29, 30) sont réunies par une articulation à pivotement (10 ; 60) et en ce qu'à l'articulation à pivotement (10 ; 60) est associé un arrêt de pivotement (24, 74) qui permet aux demi-entretoises (15, 16 ; 29, 30) de pivoter uniquement dans le sens de pivotement (flèche 35) qui s'éloigne des isolateurs (par exemple 3).

2. Dispositif de protection suivant la revendication 1, caractérisé en ce que l'articulation à pivotement est constituée sous la forme d'une articulation simple (10).

3. Dispositif de protection suivant la revendication 1, caractérisé en ce que l'arrêt de pivotement est réalisée sous la forme d'une butée (36) avec des bords (13, 14) qui sont dirigés l'un vers l'autre et en ce que, en dessous de cette butée (36), se trouve l'articulation simple (10) composée de parties oreilles (20, 21) et d'une broche (22) qui traverse ces parties oreilles.

4. Dispositif de protection suivant l'une des revendications 1 ou 2, caractérisé en ce que l'arrêt de pivotement (24) est réalisé sous la forme d'une barreté de flexion (25) associée à l'articulation (10).

5. Dispositif de protection suivant la revendication 4, caractérisé en ce que la barre de flexion (25) est fixée dans la région de l'articulation sous le bord inférieur de l'une des demi-entretoises (par exemple 15) et s'appuie contre le bord inférieur de la deuxième demi-entretoise (par exemple 16).

6. Dispositif de protection suivant l'une des revendications 1 ou 2, caractérisé en ce que l'arrêt de pivotement (24) est réalisé sous la forme d'étriers à allongement (26) reliés aux demi-entretoises (15, 16), placés au-dessus de l'articulation.

7. Dispositif de protection suivant l'une des revendications 1 ou 2, caractérisé en ce que l'arrêt de pivotement (24) est réalisé sous la forme d'accumulations de masse (44), montées rigidement sur les demi-entretoises (15, 16) chacune par l'intermédiaire d'une tige, à distance aussi grande que possible des axes instantanés de rotation valables dans le cas de la rupture d'un isolateur (en 5).

8. Dispositif de protection suivant l'une des revendications 1 ou 2, caractérisé en ce que l'arrêt de pivotement (24) est réalisé sous la forme d'un amortisseur hydraulique, tige pliable, barre d'allongement, amortisseur à friction et/ou sous la forme d'une patte présentant une fente capable de s'élargir avec l'amortissement.

9. Dispositif de protection suivant la revendication 1, caractérisé en ce que l'articulation (10) est réalisée sous la forme d'un voile (33) dimensionné relativement faible reliant rigidement les deux demi-entretoises (29, 30), (Fig. 15).

10. Dispositif de protection suivant la revendication 9, caractérisé en ce que les deux demi-entretoises sont réalisés en une seule pièce avec le voile (28) qui les réunit.

11. Dispositif de protection suivant la revendication 1, caractérisé en ce que l'ensemble d'articulation est réalisé sous la forme d'une double articulation ($60_1$, $60_2$) comprenant au moins une patte d'articulation (68) reliant les articulations simples (87, 88), (Fig. 17).

12. Dispositif de protection suivant la revendication 11, caractérisé en ce que les axes de pivotement de la double articulation $(60_1, 60_2)$ se trouvent entre le plan de symétrie (23) et les axes d'articulation (87, 88) des câbles conducteurs (7, 8).

13. Dispositif de protection suivant la revendication 11, caractérisé en ce que les axes de pivotement de la double articulation $(60_1, 60_2)$ sont identiques aux axes d'articulation (87, 88) des câbles conducteurs (7, 8).

14. Dispositif de protection suivant la revendication 11, caractérisé en ce que l'arrêt de pivotement (24) est réalisé sous la forme d'agrafes élastiques (75) associées à l'articulation double (60).

15. Dispositif de protection suivant la revendication 11, caractérisé en ce que l'arrêt de pivotement (24) est réalisé sous la forme d'étriers à allongement incurvés (26) réunis aux demi-entretoises (15, 16) placés au-dessus de l'articulation double $(60_1, 60_2)$.

16. Dispositif de protection suivant la revendication 11, caractérisé en ce que l'arrêt de pivotement (74) est réalisé sous la forme d'une butée (86) fixée au-dessous de la patte d'articulation (68) et qui s'appuie contre le bord inférieur (12) des demi-entretoises (15, 16).

17. Dispositif de protection suivant la revendication 11, caractérisé en ce que l'arrêt de pivotement (24) est réalisé sous la forme d'accumulations de masse (44) montées rigidement sur les demi-entretoises (15, 16) chacune par l'intermédiaire d'une tige, à distance aussi grande que possible des axes de rotation instantanés valables dans le cas d'une rupture d'isolateur.

18. Dispositif de protection suivant la revendication 11, caractérisé en ce que les demi-entretoises (29, 30) sont de forme à peu près triangulaire (Fig. 17), en ce que les bords supérieurs (11) des triangles se trouvent sur une horizontale et qu'aussi bien la patte d'articulation (68) que les câbles conducteurs (7, 8) sont articulées sur les pointes des triangles qui regardent vers le bas et en ce que la butée (86) est formée par un nez (par exemple sur 29) qui s'engage dans une rainure (par exemple sur 30).

19. Dispositif de protection suivant la revendication 11, caractérisé en ce que les demi-entretoises (29, 30) sont de forme à peu près en trapèze (Fig. 21), en ce que les grands côtés (61) des trapèzes se trouvent sur une horizontale, en ce que les petits côtés (62) des trapèzes présentent chacun deux articulations, en ce que les articulations intérieures $(60_1, 60_2)$ sont réunies par l'intermédiaire d'au moins une patte d'articulation (68) en ce que les câbles conducteurs (7, 8) sont reliés aux demi-entretoises (29, 30) par l'intermédiaire d'articulations extérieures (87, 88) et en ce que l'arrêt de translation (74) est associé au point de contact des grands côtés (61) des trapèzes.

0 050 688

Fig.1

Fig. 2

Fig. 3

Fig. 4

1

Fig. 5

Fig. 6

Fig. 7

Fig. 8

Fig. 15

Fig. 16

Fig. 18

2

Fig. 9

Fig. 10

Fig. 13

Fig. 11

Fig. 14

Fig. 12

Fig. 19

Fig. 20

Fig. 17

Fig. 21